# EUROPEAN PATENT APPLICATION

(11) **EP 0 735 390 A2**
(43) Date of publication of application: **02.10.1996**
(21) Application number: 96302322.1
(22) Date of filing: 01.04.1996
(51) Int. Cl.: G02B 6/30

(54) **Device for optically connecting an optical waveguide and an optical fibre**

(30) Priority: 31.03.1995 JP 97609/95
(71) Applicant: NEC CORPORATION, Tokyo (JP)
(72) Inventor: Funabashi, Masaaki, Minato-ku, Tokyo (JP)
(74) Representative: Moir, Michael Christopher

(57) **Abstract**

A waveguide-type optical device is constituted by an optical waveguide circular rod (3) inside which an optical waveguide device (1) is fixed and supported, an optical fiber circular rod (4) inside which the end of an optical fiber (2) is fixed and supported and a circular sleeve (5) within both ends of which the optical waveguide circular rod (3) and optical fiber circular rod (4) are fitted. An optical waveguide (1) and an optical fiber (2) can be readily aligned by forming the circular rod (3) in a circle so that one optical waveguide in an optical waveguide device (1) is located in the center and the circular rod (4) in a circle so that one optical fiber (2) is located in the center. Another optical.waveguide and another optical fiber can be readily aligned by setting a position in the peripheral direction and fitting both the circular rods (3,4) and to the circular sleeve (5). An optical fiber (2) and an optical waveguide device (1) can be readily connected.

## Description

The present invention relates to an optical device for optical communication and more particularly to a structure for optically connecting an optical waveguide device and an optical fiber.

If an optical waveguide formed on a semiconductor or derivative substrate and an optical fiber are to be optically connected, the optical waveguide (core) formed on such a substrate and the core of the optical fiber must be connected oppositely.

Previously, to connect and fix an optical fiber terminal wherein an optical fiber and an optical waveguide substrate are housed, firstly the core of the optical fiber and the core of the optical waveguide must be aligned. To achieve this they are respectively moved gradually using a manipulator or such like. Simultaneously, light is injected through the optical fiber or the optical waveguide and the output is monitored. The optical fiber and the optical waveguide are adjusted to their optimum position based upon the intensity of monitored light, which varies depending upon their relative positional relationship. After the optimum position is detected, the optical fiber terminal and the optical waveguide substrate are fixed.

However, as an adhesive is normally used for fixing both, the optical fiber terminal and the optical waveguide substrate, a fixed time is required until the adhesive is hardened. In some cases, an optimum positional relationship cannot be maintained due to subtle positional change of a manipulator during this time period. Also, the strength of fixing by adhesion is low and deterioration due to aging may occur.

An object of at least the preferred embodiments of the present invention is to provide a waveguide-type optical device wherein an optical fiber and an optical waveguide can be readily connected.

In a first aspect of the present invention an optical device comprises:
an optical waveguide;
an optical fiber;
profiled optical waveguide housing means inside which said optical waveguide is disposed and on the end face of which the end of said optical waveguide is exposed;
profiled optical fiber housing means inside which the end of said optical fiber is disposed and on the end face of which the end of said optical fiber is exposed; and
a conformingly-profiled member into the ends of which said profiled optical waveguide and said profiled optical fiber are respectively fitted.

Preferably, the cross-section of said profiled optical waveguide housing means is in the shape of a half moon, said profiled optical waveguide housing means being provided with means for housing an upper part of a substrate in which said optical waveguide is formed and means for housing a lower part of substrate in which said optical waveguide is formed.

Alternatively, said profiled optical waveguide housing means is cylindrical, said profiled optical waveguide housing means being provided with means for housing a substrate in which said optical waveguide is formed and means for pressing said substrate housed in said groove.

In a second aspect of the present invention, an optical device comprises:
a plurality of optical waveguides arranged at a predetermined interval;
a plurality of optical fibers arranged at an interval equal to said predetermined interval;
cylindrical optical waveguide housing means for housing one of said plural optical waveguides so that it is located in the center thereof;
cylindrical optical fiber housing means having an outer diameter approximately equal to the outer diameter of said cylindrical optical waveguide housing means for housing one of said plurality of optical fibers so that it is located in the center thereof; and
cylindrical connecting means having a bore diameter larger than said outer diameter for optically connecting said optical waveguide and said optical fiber therein.

An optical waveguide module according to one preferred embodiment of the present invention is provided with an optical waveguide circular rod inside which an optical waveguide device is fixed and supported and on the axial end face of which the connecting end of the optical waveguide is exposed. The optical waveguide module is also provided with an optical fiber circular rod inside which the end of an optical fiber is fixed and supported and on the axial end face of which the connecting end of the optical fiber is exposed. The optical waveguide module is further provided with a circular sleeve into the ends of which the optical waveguide circular rod and the optical fiber circular rod are fitted. The optical waveguide circular rod is formed with one of a plurality of optical waveguides of the optical waveguide device at the center thereof. The optical fiber circular rod is formed with one of the arranged plurality of optical fibers at the center thereof.

The optical waveguide circular rod and the optical fiber circular rod are provided with a shaft hole formed inside the respective columnar member or a groove formed on a part of the respective circumference. A base member for supporting the optical waveguide device and the end of the optical fiber is fixed into the shaft hole or on the groove.

The columnar member is divided in two and a groove is provided on at least a face of a divided member. The base member for the optical waveguide device and the optical fiber is fitted into this groove and the faces of the divided members are respectively bonded. A cylindrical member is incorporated outside the columnar member and the peripheral face of this cylindrical member is formed circularly.

The circular rod comprises the columnar member provided with the base member for the optical waveguide device and the optical fiber disposed therein. The optical waveguide and optical fiber can be readily aligned by forming the peripheral face of the circular rod circularly with each of the optical waveguide and the optical fiber postioned centrally.

As the circumferential position can be determined by engaging the circular rod with the circular sleeve, the other optical waveguides and the optical fiber can be readily aligned.

In a waveguide-type optical device according to another preferred embodiment of the present invention, a base member in which an optical waveguide device and an optical fiber are supported is fixed into a shaft hole or on a groove provided to a columnar member. A cylindrical member is fitted to the outside of this columnar member. The end faces of the columnar member and the cylindrical member are polished together with the base member for the optical waveguide device and the optical fiber so as to flatten them. The peripheral face of the cylindrical member is machined so that is formed circularly with one of optical waveguides of the optical waveguide device or one of optical fibers centrally positioned. By the above-described process the optical waveguide circular rod and the optical fiber circular rod can be manufactured.

Preferred features of the present invention will now be described, purely by way of example only, with reference to the accompanying drawings in which:
Fig. 1 is a perspective drawing showing an example of the conventional waveguide-type optical device;
Fig. 2 is a perspective drawing showing another example of the conventional waveguide-type optical device;
Fig. 3 is a perspective exploded view showing an embodiment of a waveguide-type optical device according to the present invention;
Fig. 4 is a perspective drawing showing an example of an optical waveguide device used for a waveguide-type optical device according to the present invention;
Fig. 5 shows the end face of an optical waveguide circular rod used for a waveguide-type optical device according to the present invention;
Fig. 6 is a conceptual drawing to explain a method of machining the circular rod shown in Fig. 5;
Fig. 7 is a perspective exploded view showing the optical fiber circular rod shown in Fig. 5; and
Fig. 8 is a cross section showing an example of another constitution of each circular rod.

First, the conventional waveguide-type optical device will be described to facilitate understanding of the present invention before the waveguide-type optical device according to the present invention is described.

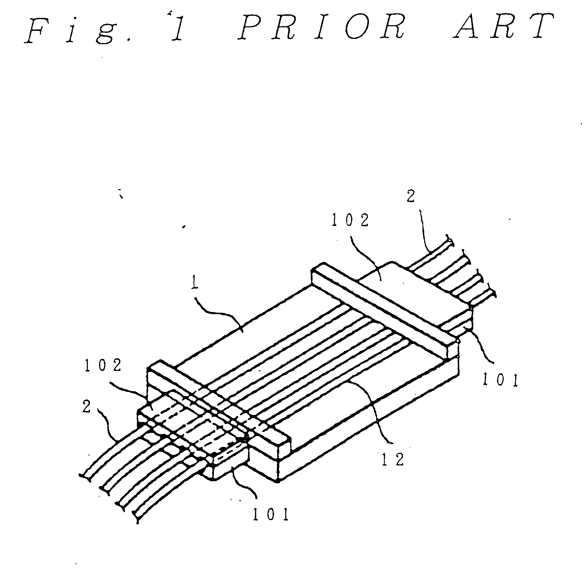

Fig. 1 is a perspective drawing showing an example of the conventional waveguide-type optical device. The waveguide-type optical device shown in Fig. 1 is provided with an optical waveguide device 1 wherein four optical waveguides 12 respectively connected to four optical fibers 2 are formed. The optical fibers 2 are respectively arranged on a substrate 101 on which a V-shaped groove is formed. The optical fibers 2 are pressed by a cover plate 102 downward and fixed by an adhesive. Each end face of the substrate 101 and the cover plate 102 and the optical fiber 2 are polished integrally.

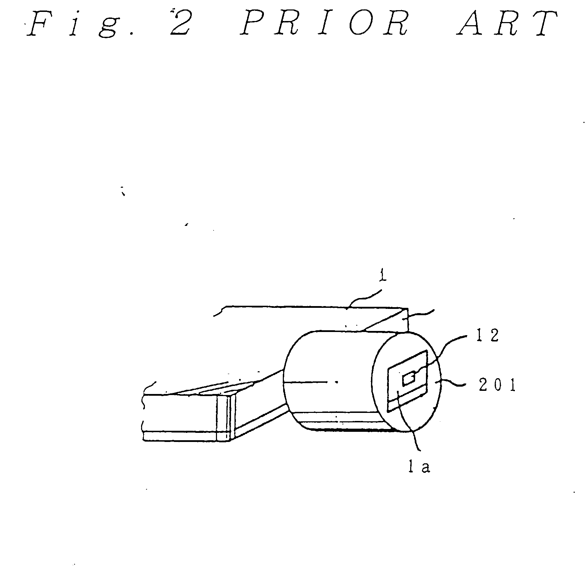

The position of the terminal of the optical fiber is adjusted so that the terminal is optically connected to the core of the optical waveguide 12 which is exposed on the end face of the substrate 101 of the optical waveguide device 1. The end faces of both are brought-into contact and adhered by an adhesive. A plurality of V-shaped grooves formed on the substrate 101 are formed so that pitch between adjacent grooves is equal to that between adjacent cores of the optical waveguides 12. By equalizing each pitch, each optical fiber 2 can be connected to a respective core of the optical waveguides. Fig. 2 shows the structure of another conventional waveguide-type optical device as described in Japanese Patent Application Laid-open No. Hei-227109. The end portion la of the device including the core of the optical waveguide 12 is formed by working a part of the optical waveguide device 1 in which the core of the optical waveguide 12 exists so that the end portion 1a protrudes from the optical waveguide device. The periphery of the end portion is integrally covered with a metallic pipe 201. The periphery of the metallic pipe 201 is machined with the core 12 as the center. An optical fiber terminal, not shown in Fig. 2 and manufactured by the same method, and the metallic pipe 201 are optically connected via a sleeve, also not shown in Fig. 2.

However, in the device shown in Fig. 1, when the core of the optical fiber and the core of the optical waveguide device are aligned to connect the optical fiber terminal and the optical waveguide device, the respective positions are moved gradually using a manipulator or such like. At this time, the optimum position is searched, checking whether the state is an optically connected state or not and in the optimum position the optical fiber terminal and the optical waveguide device are fixed by an adhesive. If a plurality of optical fibers shown in a drawing are connected, an aligning seat for a plurality of optical fibers is required. Even if the optimum position is found and the optical fiber terminal and the optical waveguide device are stuck in the optimum position, they are required to be held in the optimum position for at least one or two minutes until an adhesive is hardened. In some cases, a manipulator is minutely moved due to temperature variations, vibration or movement due to gravity and in such a case, it is impossible to hold the optical fiber terminal and the optical waveguide device in the optimum position.

According to the art shown in Fig. 2, only a part of the optical waveguide device is covered with a metallic pipe. Therefore, when the periphery is machined, the optical waveguide device must be held. As the substrate wherein an optical waveguide is formed is normally formed by fragile material, the substrate cannot bear stress when the periphery is machined and may be broken. It is also impossible to work the optical waveguide device so as to form an area including the core so that it is protruded. Further, this constitution is effective if one optical fiber is connected to one core, however, this constitution cannot be applied if a plurality of cores and an optical fiber are simultaneously connected.

Next, an embodiment of an waveguide-type optical device according to the present invention will be described in detail referring to the drawings.

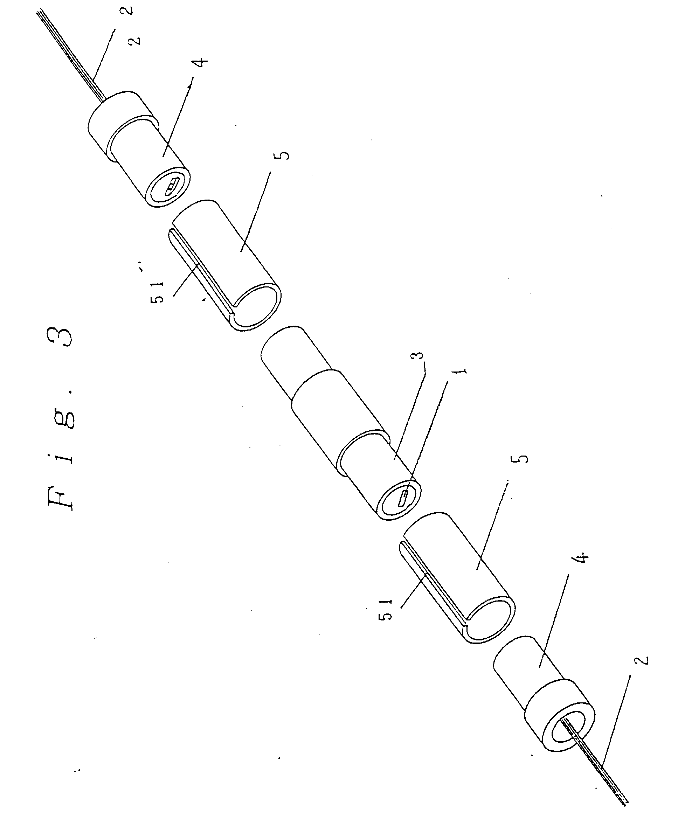

Fig. 3 is a perspective exploded view showing an embodiment of a waveguide-type optical device according to the present invention. In this case, a substrate made of quartz is used for an optical waveguide device 1 and a quartz waveguide which is formed by silicon dioxide is shown purely by way of example. The optical waveguide is provided with a light branching function.

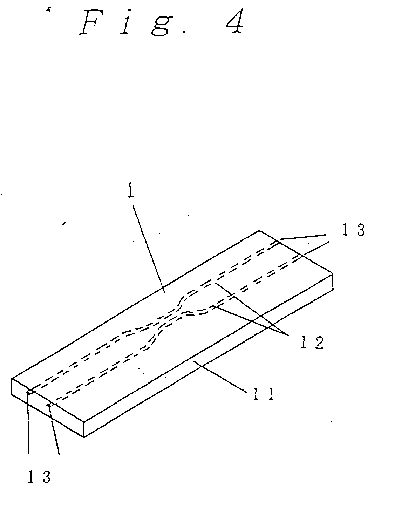

Two optical fibers 2 are respectively connected to both ends of a light branching filter. The light branching filter 1 branches light using a pair of waveguides 12 formed in a semiconductor substrate 11 such as that as shown in Fig. 4.

In this embodiment, the optical waveguide is formed in a long and thin rectangular substrate. Each end of the optical waveguide is respectively exposed in the horizontal direction and two optical waveguide ports 13 are formed. The end faces of two optical fibers 2 shown in Fig. 3 are respectively connected concentrically to these optical waveguide ports 13.

In Fig. 3, the waveguide-type optical device is provided with an optical waveguide circular rod 3 wherein a pair of optical waveguide devices 1 are housed, two optical fiber circular rods 4 for integrally supporting respective ends of optical fibers 2 and a circular sleeve 5 for concentrically connecting the optical waveguide circular rod 3 and the optical fiber circular rods 4.

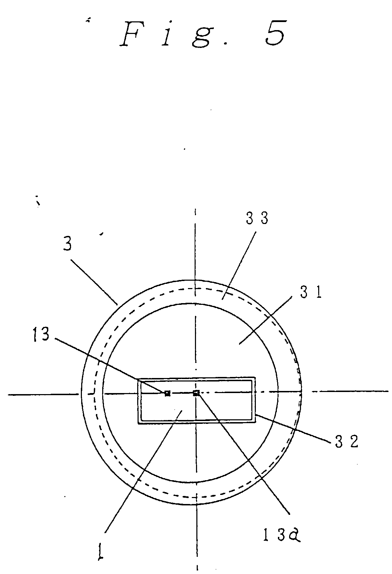

Fig. 5 shows the end face of an optical waveguide circular rod used for a waveguide-type optical device according to the present invention. A slot 32 is provided in the axial direction in the center of a columnar member 31 of the optical waveguide circular rod 3. The optical waveguide device 1 is inserted into the slot 32 and is integrally stuck and fixed on the inner face of the slot 32 by an adhesive or such like. A cylindrical member 33 is fitted around the columnar member 31 and integrated with the peripheral face of the columnar member 31 by an adhesive. The columnar member 31 and the cylindrical member 33 are formed from a metal or metallic alloy such as stainless steel or from a ceramic. The end face of the optical waveguide device 1 at the optical waveguide port 13 is flattened by polishing both ends of the columnar member 31 and the cylindrical member 33 so that the surfaces thereof are parallel.

Further, as shown by a broken line in Fig. 5, the peripheral faces of both ends of the stuck cylindrical member 33 are machined so that the peripheral face is a circle with a predetermined radius. The surface of the cylindrical member 33 is machined so that the peripheral face is a circle with one 13a of two optical waveguide ports 13 exposed substantially at the centre of the end face of the optical waveguide device 1.

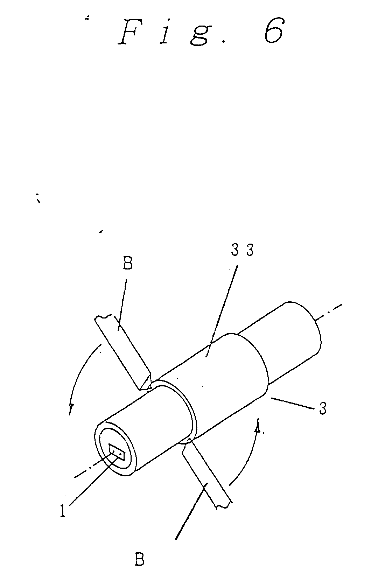

Such machining is performed by fixing and supporting the optical waveguide circular rod 3 and cutting the peripheral face of the cylindrical member 33 for example by rotating a cutting tool B around the optical waveguide circular rod, as shown in Fig. 6. The optical waveguide circular rod 3 can be cut to a predetermined radius by gradually reducing the radius of rotation of the cutting tool B. If at this time, white light is incident though the optical waveguide port 13a located in the center of the optical waveguide device 1, the axial position of this optical waveguide port 13a can be checked by this light. With this arrangement, alignment with the cutting tool B can be readily performed. The periphery at each end of the optical waveguide circular rod 3 is machined circularly with the same optical waveguide port at the center.

Obviously, the circles at both ends are concentric.

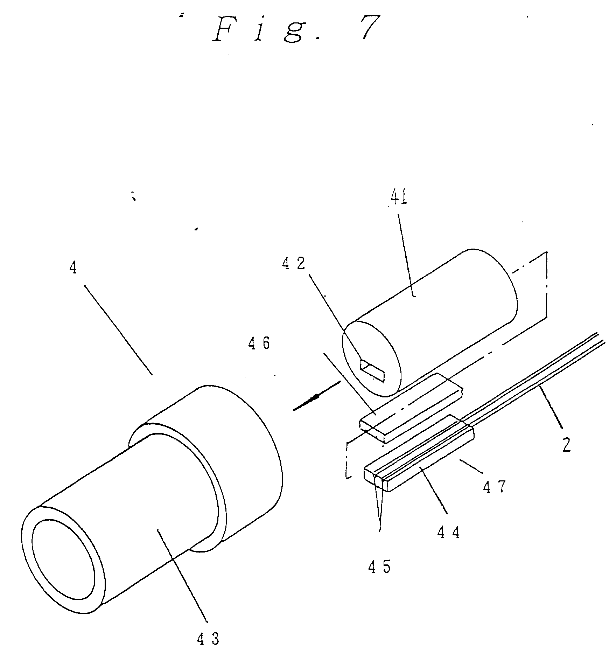

Fig. 7 is a perspective exploded view showing the optical fiber circular rod shown in Fig. 5. As shown in Fig. 7, the ends of two optical fibers 2 are arranged on a substrate 44 on the surface of which a V-shaped groove 45 is formed at the same position as that between two optical waveguide ports 13 of an optical waveguide device. Each end of the two optical fibers is fitted into a respective V-shaped groove 45. An optical fiber circular rod 4 is formed. Further, a cover plate 46 is placed on the substrate and fixed to the surface of the substrate 44 by an adhesive. The optical fiber 2 is held between the substrate 44 and the cover plate 46, forming an integrated base member 47.

A rectangular slot 42 is provided in the center of a columnar member 41. The integrated base member 47 is inserted into the slot 42, wherein it is stuck and fixed by an adhesive.

The end of the optical fiber 2 is fixed and supported by the columnar member 41. In addition, as in the case of an optical waveguide circular rod 3, a surrounding cylindrical member 43 is provided outside the columnar member 41 and fixed by an adhesive. The end faces of these columnar member 41 and the cylindrical member 43 are polished so that they are flat and the peripheral face of the cylindrical member 43 is cut so that it is a circle with a predetermined diameter with one end of the optical fiber 2 disposed centrally in the circle.

Therefore, each end face of the optical waveguide circular rod 3 formed as described above are flattened. In addition, the peripheral face is formed circularly with a central specific optical waveguide port 13a. The end faces at both ends of the optical fiber circular rod 4 are also flattened and the peripheral face is formed in a circle with one end of the optical fiber 2 as the center.

As shown in Fig. 3, the bore diameter of the peripheral face of each circular rod 3 and 4 is slightly smaller than that of the respective outer diameter thereof. One end of the optical waveguide circular rod 3 is fitted to one end of a circular sleeve 5, a part of the periphery of which is formed with a slit 51 in the axial direction of the sleeve. The other end of the circular sleeve is fitted to the end of the optical fiber circular rod 4. By fitting each circular rod 3 and 4 in the sleeve 5, the central optical waveguide port 13a and one end of the optical fiber are aligned. The space between the optical waveguide ports 13 and 13a can be manufactured with a precision of 0.5 µm or less. Therefore, by axially rotating either of the circular rods 3 and 4, the other optical waveguide port and the other optical fiber can be aligned. If in this state, each circular rod 3 and 4 is stuck and fixed on the inner face of the circular sleeve 5, the optical fiber 2 and the optical waveguide port 13 can be optically connected with great precision.

By this, the optical fiber and the optical waveguide device can be readily aligned by only rotating them. At this time, as a little radial elasticity is provided to the circular sleeve 5 by the slit 51, the elastic force of the circular sleeve holds each circular rod 3 and 4.

When each circular rod 3 and 4 is stuck and fixed to the circular sleeve 5, the optimum position can be readily held. As the optical waveguide device is not worked, no associated problem such as breakage occurs.

In this embodiment, in the case of circular rods 3 and 4, the cylindrical member is fitted on the columnar member, This construction is effective to facilitate machining and working circular material by forming the cylindrical member from material which can be relatively readily worked. If the columnar member is formed from material which can be readily worked, the cylindrical member may be omitted.

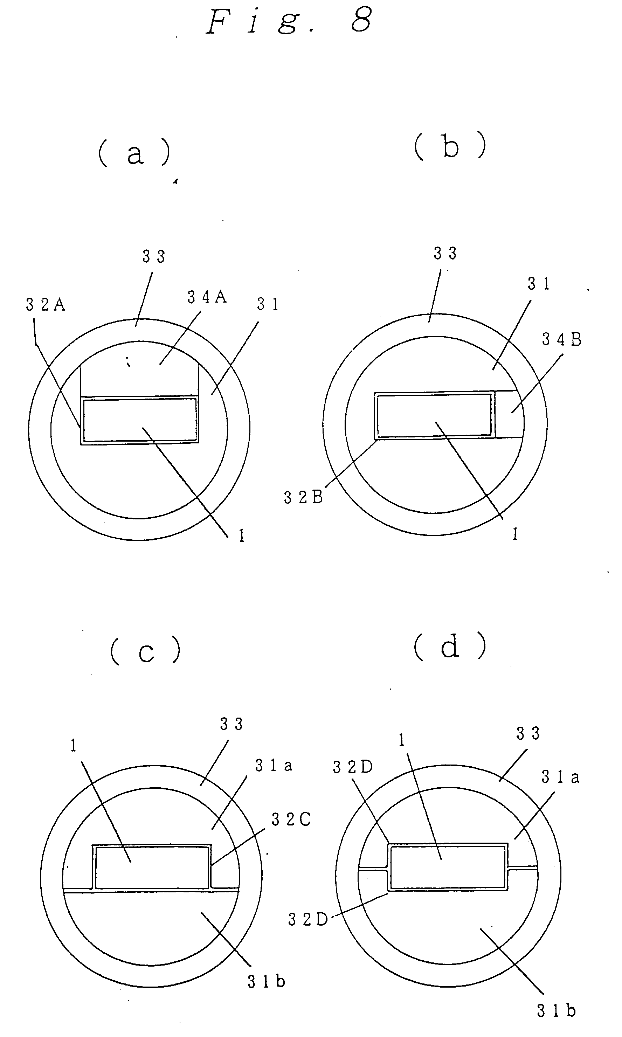

This embodiment shows an example in which the integral base member for the optical waveguide device and the optical fiber is inserted into a hole provided to the columnar member, stuck and fixed However, shown in the optical waveguide circular rod in Figs. 8 (a) and (b), rectangular grooves 32A and 32B extending in the axial direction are formed at a part of the periphery of the columnar member 31. The optical waveguide device may be stuck and fixed to the columnar member 31 by housing the optical waveguide device 1 in such a groove. In this case, the optical waveguide device 1 and a pressing member 34A or 34B may be integrally stuck into the groove 32A or 32B respectively. In this example, the optical waveguide device 1 is located at the bottom of the rectangular groove 32A in Fig. 8 (a) and is located on the side wall of the rectangular groove 32B in Fig. 8 (b).

Alternatively as shown in Figs. 8 (c) and (d), the columnar member 31 is put approximately in the center, is divided into two divided members in the direction of the diameter and the optical waveguide device 1 may be held between the two. In Fig. 8 (c), a rectangular groove 32 C is provided in one 31a of the divided columnar members 31a and 31b. The optical waveguide device 1 is housed in this groove 32C and the other divided columnar member 31b is stuck on the optical waveguide device. In Fig. 8 (d), a shallow rectangular groove 32D is formed in each divided columnar member 31a and 31b, the optical waveguide device 1 being housed in these grooves and the two divided columnar members stuck together.

A base member for an optical fiber is also similar if it is housed in a columnar member. As described above, if a construction in which a groove is provided in a columnar member and a base member for an optical waveguide device and an optical fiber are fixed is adopted, such a state is not preferable to enhance the precision of working because a part of an adhesive is exposed on the periphery when the periphery of a columnar member is machined or worked circularly. In this case, as shown'in the above-described embodiment, by fitting a cylindrical member on a columnar member and machining or working the periphery of this columnar member, the precision can be enhanced.

In the above-described embodiment, a branching filter is used for an optical waveguide device, however, the present invention can be applied readily to other optical waveguide devices. For example, if one, three or more optical waveguides and optical fibers are connected, the present invention can be also applied.

As described above a waveguide-type optical device according to one preferred embodiment of the present invention is constituted by an dptical waveguide circular rod inside which an optical waveguide device is fixed and supported, an optical fiber circular rod inside which the end of an optical fiber is fixed and supported and a circular sleeve to which these circular rods are fitted, As the optical waveguide circular rod is formed with one of a plurality optical waveguides provided in the optical waveguide device in a central position and the optical fiber circular rod formed with one of a plurality of optical fibers in a central position, alignment by a manipulator is not required when the optical waveguide device and an optical fiber are optically connected. Therefore, the operation can be readily performed and a plurality of optical waveguides and optical fibers can be concurrently aligned and connected.

According to another preferred embodiment of the present invention, a columnar member inside which a base member for an optical waveguide device and an optical fiber is housed or a cylindrical member provided outside the columnar member is formed circularly by machining the respective periphery. Therefore, an optical waveguide device formed by fragile material is not needed to be worked. Therefore, it can be prevented from being broken by protecting it from stresses occurring during the machining of the periphery. In particular, a circle can be readily machined independently of the material of a columnar member by using a cylindrical member.

Each feature disclosed in this specification (which term includes the claims) and/or shown in the drawings may be incorporated in the invention independently of other disclosed and/or illustrated features.

The text of the abstract filed herewith is repeated here as part of the specification.

A waveguide-type optical device is constituted by an optical waveguide circular rod inside which an optical waveguide device is fixed and supported, an optical fiber circular rod inside which the end of an optical fiber is fixed and supported and a circular sleeve within both ends of which these optical waveguide circular rod and optical fiber circular rod are fitted. An optical waveguide and an optical fiber can be readily aligned by forming the circular rod in a circle so that one optical waveguide in an optical waveguide device is located in the center and the circular rod in a circle so that one optical fiber is located in the center. Another optical waveguide and another optical fiber can be readily aligned by setting a position in the peripheral direction and fitting both the circular rods and to the circular sleeve. An optical fiber and an optical waveguide device can be readily connected.

## Claims

1. An optical device, comprising:
an optical waveguide;
an optical fiber;
profiled optical waveguide housing means inside which said optical waveguide is disposed and on the end face of which the end of said optical waveguide is exposed;
profiled optical fiber housing means inside which the end of said optical fiber is disposed and on the end face of which the end of said optical fiber is exposed; and
a conformingly-profiled member into the ends of which said profiled optical waveguide and said profiled optical fiber are respectively fitted.

2. An optical device according to Claim 1, including a plurality of said optical waveguides, said profiled optical waveguide housing means having a circular cross-section, one of said plurality of optical waveguides being located centrally therein, and said profiled optical fiber member having a circular cross-section with one of plurality of optical fibers being located centrally therein.

3. An optical device according to Claim 1 or 2 wherein:
said profiled optical waveguide housing means and said profiled optical fiber housing means are respectively provided with a housing formed inside a columnar member, said device further comprising:
means for supporting said optical waveguide and said optical fiber disposed in said housing; and
a cylindrical member fitted outside said columnar member.

4. An optical device according to Claim 3 wherein:
said columnar member is axially divided in two;
a groove is provided on a face of at least one of the divided columnar members; and
said means for supporting said optical waveguide and said optical fiber is fitted inside said groove.

5. An optical device according to any one of the preceding claims, wherein:
a slit is formed on the periphery of said conformingly-profiled member; and
the normal bore diameter of said conformingly-profiled member is smaller than the external diameter of said profiled optical waveguide housing means or said profiled optical fiber housing means.

6. An optical device according to any one of the preceding claims wherein:
the cross-section of said profiled optical waveguide housing means is in the shape of a half moon, and said profiled optical waveguide housing means is provided with means for housing an upper part of a substrate in which said optical waveguide is formed and means for housing a lower part of substrate in which said optical waveguide is formed.

7. An optical device according to any one of Claims 1 to 5 wherein:
said profiled optical waveguide housing means is cylindrical, and said profiled optical waveguide housing means is provided with means for housing a substrate in which said optical waveguide is formed and means for pressing said substrate housed in said groove.

8. An optical device according to any one of the preceding claims, wherein said profiled optical fiber housing means is provided with a groove in which each of said optical fibers are respectively disposed, means for housing an upper part of said optical fibers, and means for housing a lower part of said optical fibers.

9. An waveguide optical device comprising:
a plurality of optical waveguides arranged at a predetermined interval;
a plurality of optical fibers arranged at an interval equal to said predetermined interval;
cylindrical optical waveguide housing means for housing one of said plural optical waveguides so that it is located in the center thereof;
cylindrical optical fiber housing means having an outer diameter approximately equal to the outer diameter of said cylindrical optical waveguide housing means for housing one of said plurality of optical fibers so that it is located in the center thereof; and
cylindrical connecting means having a bore diameter larger than said outer diameter for optically connecting said optical waveguide and said optical fiber therein.

10. A waveguide-type optical device according to Claim 9, wherein:
said connecting means is provided with means for aligning the direction in which said optical waveguide and said optical fiber are arranged.
